# EUROPÄISCHE PATENTANMELDUNG

(11) **EP 4 840 591 A1**
(43) Veröffentlichungstag der Anmeldung: **18.11.2026**
(21) Anmeldenummer: 26175729.8
(22) Anmeldetag: 30.04.2026
(51) Int. Cl.: B25F 5/00, B24B 23/02, B25F 5/02

(54) **VERFAHREN ZUM BETRIEB EINES ARBEITSGERÄTS UND ARBEITSGERÄT**

(30) Priorität: 12.05.2025 DE 102025118107
(71) Anmelder: Andreas Stihl AG & Co. KG, 71336 Waiblingen (DE)
(72) Erfinder: Vogt, Tim, 73525 Schwäbisch Gmünd (DE); Tost, Christopher, 71549 Auenwald (DE); Friedrich, Thomas, 73630 Remshalden (DE); Alber, Johannes, 70190 Stuttgart (DE); Plappert, Philipp, 70736 Ostfildern (DE)
(74) Vertreter: Reinhardt, Annette

(57) **Zusammenfassung**

Ein Arbeitsgerät (1) weist ein Werkzeug (8), einen Elektromotor (10) zum Antrieb des Werkzeugs (8) und eine Steuereinrichtung (12) zur Ansteuerung des Elektromotors (10) auf. Das Arbeitsgerät (1) weist ein vom Bediener zu betätigendes Bedienelement (6) zur Ansteuerung des Elektromotors (10) und ein vom Bediener zu betätigendes Sperrelement (5) auf. In einer unbetätigten Stellung (18) sperrt das Sperrelement (5) eine Ansteuerung des Elektromotors (10) mittels des Bedienelements (6). In einer betätigten Stellung (19) lässt das Sperrelement (5) die Ansteuerung des Elektromotors (10) mittels des Bedienelements (6) zu. Die Steuereinrichtung (12) ist zum elektrischen Bremsen des Elektromotors (10) im Bremsfall eingerichtet. Der Elektromotor (10) wird im Bremsfall in Abhängigkeit davon angesteuert, ob das Sperrelement (5) sich in der unbetätigten Stellung (18) oder der betätigten Stellung (19) befindet.

## Beschreibung

Die Erfindung betrifft ein Verfahren zum Betrieb eines Arbeitsgeräts der im Oberbegriff des Anspruchs 1 angegebenen Gattung sowie ein Arbeitsgerät der im Oberbegriff des Anspruchs 6 angegebenen Gattung.

Aus der EP 4 219 081 A1 geht ein Arbeitsgerät mit einem Werkzeug und einem Elektromotor zum Antrieb des Werkzeugs hervor. Zum Betätigen des Antriebsmotors ist ein Bedienelement vorgesehen, das an einem Handgriff des Arbeitsgeräts gelagert ist. Das Arbeitsgerät weist an dem Handgriff außerdem ein Sperrelement auf, das in unbetätigter Stellung eine Betätigung des Bedienelements mechanisch sperrt.

Der Erfindung liegt die Aufgabe zugrunde, ein vorteilhaftes Verfahren zum Betrieb eines Arbeitsgeräts anzugeben. Eine weitere Aufgabe der Erfindung besteht darin, ein Arbeitsgerät mit vorteilhaften Eigenschaften anzugeben.

Diese Aufgabe wird bezüglich des Verfahrens durch ein Verfahren mit den Merkmalen des Anspruchs 1 gelöst. Bezüglich des Arbeitsgeräts wird die Aufgabe durch ein Arbeitsgerät mit den Merkmalen des Anspruchs 6 gelöst.

Es ist vorgesehen, dass die Steuereinrichtung zum elektrischen Bremsen des Elektromotors im Bremsfall eingerichtet ist.

Es hat sich gezeigt, dass bei abgestelltem Arbeitsgerät bei starkem Abbremsen des Werkzeugs aufgrund der Trägheit des Werkzeugs eine Bewegung im Arbeitsgerät ausgelöst werden kann. Bei abgestelltem Arbeitsgerät ist eine solche Bewegung unerwünscht. Wenn der Bediener das Arbeitsgerät hält, wird die Bewegung des Arbeitsgeräts durch den Bediener verhindert. Wenn der Bediener das Arbeitsgerät in der Hand hält, soll im Bremsfall ein möglichst schnelles Abbremsen des Werkzeugs erfolgen.

In der betätigten Stellung des Sperrelements hält der Bediener das Arbeitsgerät üblicherweise an einem Griff, an dem das Sperrelement gelagert ist. Anhand der Betätigung des Sperrelements kann daher ermittelt werden, ob ein Bediener das Arbeitsgerät in der Hand hält oder das Arbeitsgerät abgestellt ist. Es ist vorgesehen, dass der Elektromotor im Bremsfall in Abhängigkeit davon angesteuert wird, ob das Sperrelement sich in der unbetätigten Stellung oder in der betätigten Stellung befindet. Der Elektromotor wird im Bremsfall demnach nicht immer gleich angesteuert, sondern unterschiedlich in Abhängigkeit davon, ob das Sperrelement sich in der unbetätigten Stellung oder in der betätigten Stellung befindet. Insbesondere können zumindest über einen Teil des Bremsverlaufs unterschiedliche Verzögerungen für das Werkzeug in Abhängigkeit von der Stellung des Sperrelements erzielt werden.

Der Bremsfall ist insbesondere ein Betriebszustand des Arbeitsgeräts, in dem das Werkzeug gebremst werden soll. Der Bremsfall tritt insbesondere ein, wenn der Bediener das Bedienelement nicht betätigt, insbesondere das Bedienelement loslässt. Insbesondere steuert die Steuereinrichtung den Elektromotor zum elektrischen Bremsen an, wenn der Bediener das Bedienelement nicht betätigt. Insbesondere wird der Elektromotor im Bremsfall als elektrischer Generator betrieben.

Insbesondere weist das Arbeitsgerät keine mechanische Bremseinrichtung auf. Das Abbremsen des Werkzeugs erfolgt insbesondere nur über den zum elektrischen Bremsen angesteuerten Elektromotor.

Insbesondere ist bei unbetätigtem Sperrelement ein weniger starkes Abbremsen vorgesehen als bei betätigtem Sperrelement. Dadurch kann bei betätigtem Sperrelement eine sehr schnelle Abbremsung erfolgen und bei unbetätigtem Sperrelement, also insbesondere bei abgestelltem Arbeitsgerät, die Einleitung einer Bewegung in das Arbeitsgerät aufgrund der Trägheit des Werkzeugs verhindert werden.

Insbesondere wird der Elektromotor im Bremsfall mit einer ersten Bremsansteuerung angesteuert, die ein Abbremsen des Werkzeugs von Nenndrehzahl auf eine vorgegebene Bremsdrehzahl in einer ersten Bremszeit bewirkt, wenn das Sperrelement sich in betätigter Stellung befindet. Der Elektromotor wird im Bremsfall insbesondere mit einer zweiten Bremsansteuerung angesteuert, die ein Abbremsen des Werkzeugs von Nenndrehzahl auf eine vorgegebene Bremsdrehzahl in einer zweiten Bremszeit bewirkt. Die erste und die zweite Bremszeit sind dabei bezogen auf gleiche Umgebungsbedingungen, also insbesondere bezogen auf das gleiche Werkzeug, die gleiche Nenndrehzahl und die gleiche vorgegebene Bremsdrehzahl, gemessen. Die zweite Bremszeit ist insbesondere länger als die erste Bremszeit.

Insbesondere wird das Werkzeug vollständig elektrisch abgebremst. Die vorgegebene Bremsdrehzahl entspricht insbesondere einem Stillstand des Werkzeugs. Es kann jedoch auch vorgesehen sein, dass eine Bremsdrehzahl, die größer als Null ist, akzeptiert wird, dass das Werkzeug also nicht vollständig abgebremst wird. Auch eine Bremsdrehzahl von größer als Null kann daher vorgesehen sein.

Um die unterschiedlichen Bremsansteuerungen auf einfache Weise zu realisieren, ist insbesondere vorgesehen, dass bei der ersten Bremsansteuerung ein höherer maximaler Motorstrom eingestellt wird als bei der zweiten Bremsansteuerung. Durch Einstellung eines höheren maximalen Motorstroms kann ein schnelleres Abbremsen des Elektromotors erreicht werden.

Das Arbeitsgerät umfasst insbesondere einen Akku. Die im Bremsfall im Elektromotor erzeugte Energie wird insbesondere zumindest teilweise in den Akku eingespeist. Je nach zulässiger Stromaufnahme des Akkus kann der Akku über zumindest einen Teil des Bremsverlaufs begrenzend für die Verzögerung des Werkzeugs wirken. Es kann daher vorgesehen sein, dass für einen Teil des Bremsverlaufs, insbesondere einen an die Nenndrehzahl anschließenden Teil des Bremsverlaufs, die gleiche Verzögerung bei der ersten Bremsansteuerung und der zweiten Bremsansteuerung erreicht wird. Insbesondere dann, wenn die Drehzahl des Werkzeugs sich bereits verringert hat, sind die maximale Stromaufnahme des Akkus und die maximal zulässigen Motorströme der ersten Bremsansteuerung und der zweiten Bremsansteuerung jedoch insbesondere so gewählt, dass sich unterschiedliche Verzögerungen bei der ersten Bremsansteuerung und der zweiten Bremsansteuerung ergeben. Dadurch können auf einfache Weise unterschiedliche Bremszeiten für die erste Bremsansteuerung und die zweite Bremsansteuerung erreicht werden, selbst wenn ansonsten gleiche Bedingungen herrschen.

Es kann vorgesehen sein, dass ein Teil der im Bremsfall im Elektromotor erzeugten Energie nicht in den Akku eingespeist wird. Dadurch kann die Stromaufnahme des Akkus verringert werden. Die nicht in den Akku eingespeiste Energie kann einem anderen Verbraucher zugeführt und/oder in Wärme umgewandelt werden.

Für ein Arbeitsgerät mit einem Werkzeug, einem Elektromotor zum Antrieb des Werkzeugs, einer Steuereinrichtung zur Ansteuerung des Elektromotors, einem vom Bediener zu betätigenden Bedienelement zur Ansteuerung des Elektromotors und einem vom Bediener zu betätigenden Sperrelement ist vorgesehen, dass in der Steuereinrichtung zumindest eine erste Bremsansteuerung und zumindest eine zweite Bremsansteuerung zum elektrischen Bremsen des Elektromotors hinterlegt sind. Die Steuereinrichtung ist dazu ausgebildet, den Elektromotor im Bremsfall in Abhängigkeit der Stellung des Sperrelements mit der ersten Bremsansteuerung oder mit der zweiten Bremsansteuerung anzusteuern.

Die erste Bremsansteuerung bewirkt insbesondere ein Abbremsen des Werkzeugs von einer Nenndrehzahl auf eine vorgegebene Bremsdrehzahl in einer ersten Bremszeit. Die zweite Bremsansteuerung bewirkt insbesondere ein Abbremsen des Werkzeugs von der Nenndrehzahl auf die vorgegebene Bremsdrehzahl in einer zweiten Bremszeit. Die zweite Bremszeit ist insbesondere länger als die erste Bremszeit. Die Steuereinrichtung steuert den Elektromotor bei unbetätigter Stellung des Sperrelements mit der zweiten Bremsansteuerung an. Dadurch ergibt sich bei unbetätigter Stellung des Sperrelements, insbesondere bei abgestelltem Arbeitsgerät, eine längere Bremszeit. Bei betätigter Stellung des Sperrelements steuert die Steuereinrichtung den Elektromotor insbesondere mit der ersten Bremsansteuerung an.

Es kann vorgesehen sein, dass das Arbeitsgerät weitere Bremsansteuerungen für weitere Betriebsfälle aufweist. Die weiteren Bremsansteuerungen können bei Vorliegen weiterer Kriterien bei unbetätigter und/oder betätigter Stellung des Sperrelements vorgesehen sein.

Insbesondere sperrt das Sperrelement in unbetätigter Stellung das Bedienelement mechanisch. Es kann jedoch auch vorgesehen sein, dass das Sperrelement in unbetätigter Stellung die Ansteuerung des Elektromotors mittels des Bedienelements elektrisch verhindert, beispielsweise dadurch, dass die Position des Sperrelements elektrisch abgefragt und in der Steuereinrichtung entsprechend verarbeitet und dass bei unbetätigtem Sperrelement ein Anlaufen des Elektromotors unterbunden wird.

Insbesondere wirkt das Sperrelement auf einen Schalter, der mit der Steuereinrichtung verbunden ist. Insbesondere betätigt das Sperrelement den Schalter in unbetätigter Stellung.

Unterschiedliche Bremsansteuerungen sind insbesondere bei Arbeitsgeräten von Vorteil, deren Werkzeug eine hohe Massenträgheit aufweist. Insbesondere ist das Arbeitsgerät ein Trennschleifer, und das Werkzeug ist eine Trennscheibe.

Ein Ausführungsbeispiel der Erfindung wird im Folgenden anhand der Zeichnung erläutert. Es zeigen:
- Fig. 1: eine Seitenansicht eines Arbeitsgeräts,
- Fig. 2: eine perspektivische Darstellung des Bereichs des Handgriffs des Arbeitsgeräts, wobei eine Griffhalbschale abgenommen ist und wobei ergänzend ein Wasseranschluss dargestellt ist,
- Fig. 3: eine ausschnittsweise Schnittdarstellung des Bereichs von Bedienelement und Sperrelement des Arbeitsgeräts aus Fig. 1 bei unbetätigtem Sperrelement und unbetätigtem Bedienelement,
- Fig. 4: eine Schnittdarstellung entsprechend Fig. 3 bei betätigtem Sperrelement und betätigtem Bedienelement,
- Fig. 5: eine schematische Darstellung des Ablaufs des Verfahrens zur Steuerung des Arbeitsgeräts,
- Fig. 6: schematische Diagramme des Verlaufs von Drehmoment, Drehzahl und Leistung über der Zeit bei unterschiedlichen Bremsansteuerungen des Elektromotors des Arbeitsgeräts.

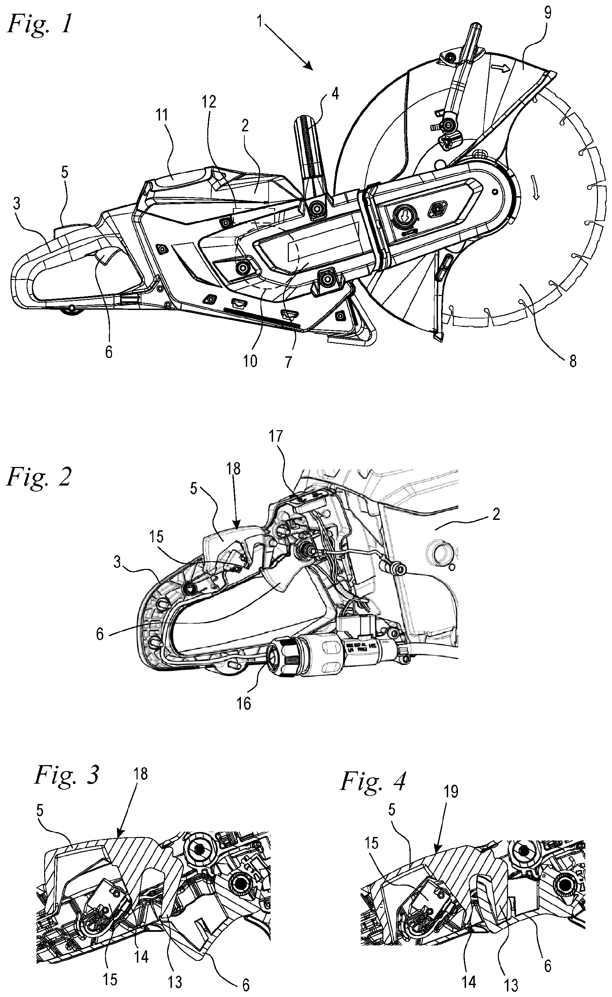

Fig. 1 zeigt ein Arbeitsgerät 1. Das Arbeitsgerät 1 ist ein handgeführtes, handgetragenes Arbeitsgerät. Im Ausführungsbeispiel ist das Arbeitsgerät 1 ein Trennschleifer. Das Arbeitsgerät 1 kann jedoch auch ein anderes Arbeitsgerät sein. Insbesondere ist das Arbeitsgerät 1 ein Arbeitsgerät mit einem rotierenden Werkzeug, insbesondere mit einem rotierenden Werkzeug mit großer Massenträgheit.

Das Arbeitsgerät 1 weist ein Gehäuse 2 auf, an dem ein Handgriff 3 und ein Griffrohr 4 angeordnet sind. Am Handgriff 3 sind ein Sperrelement 5 und ein Bedienelement 6 angeordnet. Das Sperrelement 5 dient zur Anwesenheitskontrolle eines Bedieners. Hält ein Bediener den Handgriff 3 mit seiner Hand, so betätigt er dabei insbesondere das Sperrelement 5. Ohne Betätigung des Sperrelements 5 ist eine Ansteuerung eines Werkzeugs 8 des Arbeitsgeräts 1 durch Betätigung des Bedienelements 6 insbesondere nicht möglich.

Am Gehäuse 2 ist ein Ausleger 7 angeordnet. Am Ausleger 7 ist das Werkzeug 8 drehbar gelagert. Im Ausführungsbeispiel ist das Werkzeug 8 eine Trennscheibe. Das Werkzeug 8 ist über einen Teil seines Umfangs von einer Schutzhaube 9 umgeben. Bei einer anderen Art von Arbeitsgerät 1 kann eine andere Anordnung des Werkzeugs 8 vorgesehen sein.

Zum Antrieb des Werkzeugs 8 weist das Arbeitsgerät 1 einen im Gehäuse 2 angeordneten Elektromotor 10 auf. Zur Versorgung des Elektromotors 10 mit Energie ist im Gehäuse 2 ein Akku 11 angeordnet. Der Akku 11 ist im Gehäuse 2 insbesondere auswechselbar gehalten. Zur Ansteuerung des Elektromotors 10 ist eine Steuereinrichtung 12 vorgesehen, die ebenfalls im Gehäuse 2 angeordnet ist.

Fig. 2 zeigt das Sperrelement 5 in einer unbetätigten Stellung 18. In dieser Stellung greift der Bediener den Handgriff 3 insbesondere nicht. Das Sperrelement 5 befindet sich insbesondere in unbetätigter Stellung 18, wenn das Arbeitsgerät 1 abgestellt ist. In Fig. 2 ist außerdem ein Wasseranschluss 16 für die Versorgung des Werkzeugs 8 mit Wasser zur Kühlung und zur Bindung des im Schnitt erzeugten Staubs gezeigt.

Benachbart zum Sperrelement 5 ist ein Schalter 15 angeordnet. In der unbetätigten Stellung 18 des Sperrelements 5 ist der Schalter 15 im Ausführungsbeispiel betätigt. Das Arbeitsgerät 1 weist außerdem ein Aktivierungselement 17 auf. Das Aktivierungselement 17 kann beispielsweise ein Schalter oder ein Touchdisplay sein. Um den Elektromotor 10 mit dem Bedienelement 6 in Betrieb nehmen zu können, muss insbesondere zunächst das Aktivierungselement 17 betätigt und anschließend in einer vorgegebenen, vergleichsweise kurzen Zeitspanne danach das Sperrelement 5 betätigt werden.

Fig. 3 zeigt die Anordnung von Sperrelement 5 und Bedienelement 6 im Einzelnen. Das Sperrelement 5 weist einen Betätigungsabschnitt 14 auf, der in der unbetätigten Stellung 18 des Sperrelements 5 den Schalter 15 betätigt. Das Sperrelement 5 weist außerdem einen Sperrabschnitt 13 auf. In unbetätigter Stellung 18 des Sperrelements 5 befindet sich der Sperrabschnitt 13 im Schwenkweg des Bedienelements 6. Der Sperrabschnitt 13 blockiert das Bedienelement 6 mechanisch.

Fig. 4 zeigt das Sperrelement 5 in einer betätigten Stellung 19. Der Sperrabschnitt 13 befindet sich in dieser Stellung nicht im Schwenkweg des Bedienelements 6. In Fig. 4 ist das Bedienelement 6 in vollständig betätigter Stellung gezeigt. Der Betätigungsabschnitt 14 ist entfernt vom Schalter 15 angeordnet und betätigt den Schalter 15 nicht.

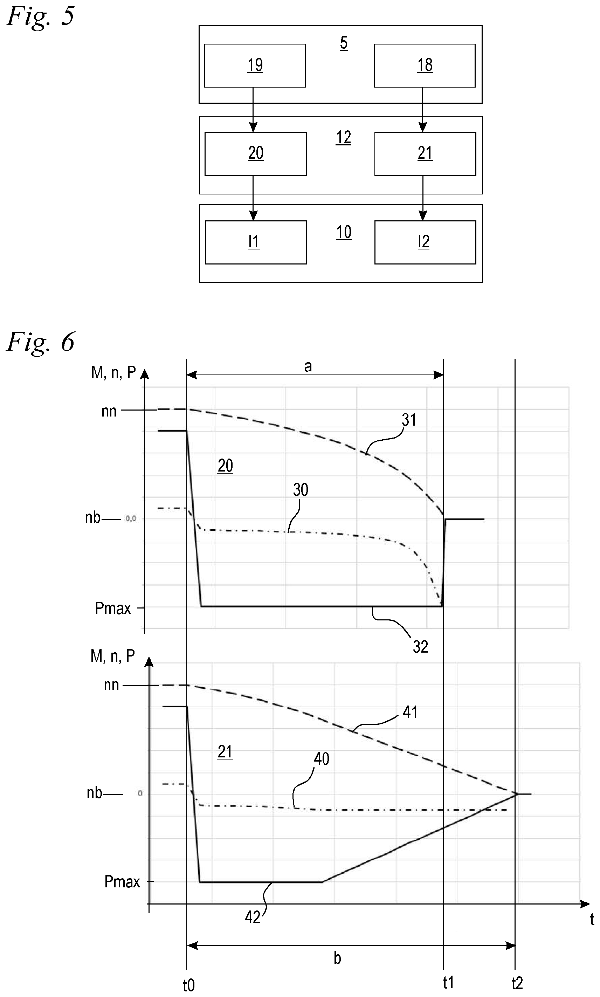

Wie Fig. 5 zeigt, sind in der Steuereinrichtung 12 eine erste Bremsansteuerung 20 und eine zweite Bremsansteuerung 21 hinterlegt. Die Bremsansteuerungen 20 und 21 unterscheiden sich in der Verzögerung des Elektromotors 10 bzw. des Werkzeugs 8 im Bremsfall. Im Ausführungsbeispiel ist vorgesehen, zur Erzielung von unterschiedlichen Verzögerungen bei den Bremsansteuerungen 20 und 21 unterschiedliche maximale Motorströme I1 und I2 vorzusehen. Bei der ersten Bremsansteuerung 20 ist ein erster, vergleichsweise hoher maximaler Motorstrom I1 vorgesehen. Bei der zweiten Bremsansteuerung 21 ist ein zweiter, niedrigerer maximaler Motorstrom I2 vorgesehen. Der zweite maximale Motorstrom I2 kann beispielsweise das 0,1fache bis 0,6fache des ersten maximalen Motorstroms I1 betragen.

Im Ausführungsbeispiel ist vorgesehen, dass die Steuereinrichtung 12 im Bremsfall die erste Bremsansteuerung 20 oder die zweite Bremsansteuerung 21 in Abhängigkeit davon auswählt, ob sich das Sperrelement 5 in der unbetätigten Stellung 18 oder der betätigten Stellung 19 befindet.

Befindet sich das Sperrelement in der betätigten Stellung 19, wird die erste Bremsansteuerung 20 von der Steuereinrichtung 12 ausgewählt. Bei betätigter Stellung 19 des Sperrelements 5 umgreift der Bediener üblicherweise den Handgriff 3 und hält damit das Arbeitsgerät 1. Bei der ersten Bremsansteuerung 20 wird der maximale Motorstrom des Elektromotors 10 auf einen ersten maximalen Motorstrom I1 begrenzt, der vergleichsweise hoch liegt.

In Fig. 6 ist im oberen Diagramm der Verlauf des Drehmoments M des Elektromotors 10 durch eine Kurve 30 schematisch dargestellt. Die Drehzahl n des Elektromotors 10 ist durch eine Kurve 31 schematisch dargestellt. Die Bremsleistung P ist durch eine Kurve 32 schematisch dargestellt. Zu einem Zeitpunkt t0 beginnt der Bremsvorgang. Der Bremsvorgang wird insbesondere eingeleitet, wenn ein Bediener das Bedienelement 6 loslässt. Die Drehzahl n zum Zeitpunkt t0 entspricht im Diagramm einer Nenndrehzahl nn. Die Bremsleistung P erreicht gemäß der Kurve 32 sehr schnell eine maximale Bremsleistung Pmax. Die Drehzahl n sinkt entsprechend der Kurve 31 vergleichsweise schnell von der Nenndrehzahl nn auf eine Bremsdrehzahl nb ab. Die Bremsdrehzahl nb kann beispielsweise Null betragen und damit dem Stillstand von Elektromotor 10 und Werkzeug 8 entsprechen. Wie Fig. 6 im oberen Diagramm zeigt, bleibt die Kurve 30, die das Drehmoment M angibt, zunächst etwa konstant und sinkt dann bei niedrigeren Drehzahlen n sehr schnell ab. Die erste Bremszeit a vom ersten Zeitpunkt t0 bis zu einem zweiten Zeitpunkt t1, bei dem die Bremsdrehzahl nb erreicht ist, ist vergleichsweise kurz.

Wie Fig. 5 zeigt, wählt die Steuereinrichtung 12 die zweite Bremsansteuerung 21 aus, wenn das Sperrelement 5 sich in seiner unbetätigten Stellung 18 befindet. In diesem Zustand ist das Arbeitsgerät 1 üblicherweise abgestellt oder der Bediener hält den Handgriff 3 nicht in der für den Betrieb vorgesehenen Weise. Gemäß der zweiten Bremsansteuerung 21 wird der maximale Motorstrom auf einen zweiten maximalen Motorstrom I2 begrenzt. Der zweite maximale Motorstrom I2 ist deutlich kleiner als der erste maximale Motorstrom I1.

In Fig. 6 ist im unteren Diagramm der Verlauf von Drehmoment M, Drehzahl n und Bremsleistung P des Elektromotors 10 bei einer Ansteuerung des Elektromotors 10 nach der zweiten Bremsansteuerung 21 schematisch dargestellt. Der Verlauf des Drehmoments M ist durch eine Kurve 40 dargestellt. Wie Fig. 6 zeigt, bleibt das Drehmoment M bei einer Ansteuerung des Elektromotors 10 nach der zweiten Bremsansteuerung 21 bis zum Erreichen der Bremsdrehzahl nb weitgehend konstant. Die Kurve 41 zeigt den Verlauf der Drehzahl n. Die Drehzahl n fällt bei niedrigeren Drehzahlen n weniger stark ab als bei einer Ansteuerung des Elektromotors 10 nach der ersten Bremsansteuerung 20, wie ein Vergleich der Kurve 41 mit der Kurve 31 zeigt.

Der Verlauf der Bremsleistung P ist schematisch durch eine Kurve 42 dargestellt. Wie Fig. 6 zeigt, wird der Elektromotor 10 auch bei einer Ansteuerung nach der zweiten Bremsansteuerung 21 zunächst mit der maximalen Bremsleistung Pmax gebremst, wie die Kurve 42 zeigt. Die Bremsleistung P verringert sich jedoch im Verlauf des Bremsvorgangs. Zu einem dritten Zeitpunkt t2, der nach dem zweiten Zeitpunkt t1 liegt, hat die Drehzahl n die Bremsdrehzahl nb, beispielsweise den Stillstand des Werkzeugs 8 und des Elektromotors 10, erreicht. Zum ersten Zeitpunkt t0 bis zum dritten Zeitpunkt t2 vergeht eine zweite Bremszeit b, die größer als die erste Bremszeit a ist. Die zweite Bremszeit b kann beispielsweise 5 % bis 150 % größer als die erste Bremszeit a sein.

Bei beiden Bremsansteuerungen 20 und 21 wird die im Elektromotor 10 erzeugte Energie in den Akku 11 (Fig. 1) zurückgespeichert. Der Elektromotor 10 wird im Bremsfall als Nutzbremse oder Rekuperationsbremse betrieben. Die maximale Bremsleistung Pmax ist dadurch durch die maximale Leistungsaufnahme des Akkus 11 begrenzt. Bei der ersten Bremsansteuerung 20 erfolgt der Bremsvorgang über den Großteil der Bremszeit a mit maximaler Bremsleistung Pmax. Bei der zweiten Bremsansteuerung 21 erfolgt der Bremsvorgang nur zur Beginn der Bremsung, beispielsweise über 10 % bis 60 % der zweiten Bremszeit b, mit der maximalen Bremsleistung Pmax. Dadurch ergibt sich die gegenüber der ersten Bremszeit a vergrößerte zweite Bremszeit b.

Es kann auch vorgesehen sein, dass zumindest ein Teil der im Elektromotor 10 erzeugten Energie nicht in den Akku 11 zurückgespeichert wird. Die nicht in den Akku 11 zurückgespeicherte Energie kann insbesondere einem anderen Verbraucher zugeführt oder in Wärme umgewandelt werden.

Die Bremszeiten a und b beziehen sich auf das gleiche Werkzeug 8, die gleiche Nenndrehzahl nn zu Beginn des Bremsvorgangs und die gleiche Bremsdrehzahl nb am Ende des Bremsvorgangs. Auch andere Parameter des Arbeitsgeräts 1 sind insbesondere für den Vergleich der Bremszeiten a und b gleich.

## Patentansprüche

1. Verfahren zum Betrieb eines Arbeitsgeräts (1) mit einem Werkzeug (8), mit einem Elektromotor (10) zum Antrieb des Werkzeugs (8), mit einer Steuereinrichtung (12) zur Ansteuerung des Elektromotors (10), mit einem vom Bediener zu betätigenden Bedienelement (6) zur Ansteuerung des Elektromotors (10) und mit einem vom Bediener zu betätigenden Sperrelement (5), wobei das Sperrelement (5) in einer unbetätigten Stellung (18) eine Ansteuerung des Elektromotors (10) mittels des Bedienelements (6) sperrt und wobei das Sperrelement (5) in einer betätigten Stellung (19) die Ansteuerung des Elektromotors (10) mittels des Bedienelements (6) zulässt,
**dadurch gekennzeichnet, dass** die Steuereinrichtung (12) zum elektrischen Bremsen des Elektromotors (10) im Bremsfall eingerichtet ist und dass der Elektromotor (10) im Bremsfall in Abhängigkeit davon angesteuert wird, ob das Sperrelement (5) sich in der unbetätigten Stellung (18) oder in der betätigten Stellung (19) befindet.

2. Verfahren nach Anspruch 1,
**dadurch gekennzeichnet, dass** der Elektromotor (10) im Bremsfall mit einer ersten Bremsansteuerung (20) angesteuert wird, die ein Abbremsen des Werkzeugs (8) von Nenndrehzahl (nn) auf eine vorgegebene Bremsdrehzahl (nb) in einer ersten Bremszeit (a) bewirkt, wenn das Sperrelement (5) sich in betätigter Stellung (19) befindet und dass der Elektromotor (10) im Bremsfall mit einer zweiten Bremsansteuerung (21) angesteuert wird, die ein Abbremsen des Werkzeugs (8) von Nenndrehzahl (nn) auf eine vorgegebene Bremsdrehzahl (nb) in einer zweiten Bremszeit (b) bewirkt, wobei die zweite Bremszeit (b) länger als die erste Bremszeit (a) ist.

3. Verfahren nach Anspruch 2,
**dadurch gekennzeichnet, dass** die vorgegebene Bremsdrehzahl (nb) einem Stillstand des Werkzeugs (8) entspricht.

4. Verfahren nach Anspruch 2 oder 3,
**dadurch gekennzeichnet, dass** bei der ersten Bremsansteuerung (20) ein höherer maximaler Motorstrom eingestellt wird als bei der zweiten Bremsansteuerung (21).

5. Verfahren nach einem der Ansprüche 1 bis 4,
**dadurch gekennzeichnet, dass** das Arbeitsgerät (1) einen Akku (11) umfasst und dass die im Bremsfall im Elektromotor (10) erzeugte Energie zumindest teilweise in den Akku (11) eingespeist wird.

6. Arbeitsgerät mit einem Werkzeug (8), mit einem Elektromotor (10) zum Antrieb des Werkzeugs (8), mit einer Steuereinrichtung (12) zur Ansteuerung des Elektromotors (10), mit einem vom Bediener zu betätigenden Bedienelement (6) zur Ansteuerung des Elektromotors (10) und mit einem vom Bediener zu betätigenden Sperrelement (5), wobei das Sperrelement (5) in einer unbetätigten Stellung (18) eine Ansteuerung des Elektromotors (10) mittels des Bedienelements (6) sperrt und wobei das Sperrelement (5) in einer betätigten Stellung (19) die Ansteuerung des Elektromotors (10) mittels des Bedienelements (6) zulässt, **dadurch gekennzeichnet, dass** in der Steuereinrichtung (12) zumindest eine erste Bremsansteuerung (20) und zumindest eine zweite Bremsansteuerung (21) zum elektrischen Bremsen des Elektromotors (10) hinterlegt sind, und dass die Steuereinrichtung (12) dazu ausgebildet ist, den Elektromotor (10) im Bremsfall in Abhängigkeit der Stellung (18, 19) des Sperrelements (5) mit der ersten Bremsansteuerung (20) oder mit der zweiten Bremsansteuerung (21) anzusteuern.

7. Arbeitsgerät nach Anspruch 6,
**dadurch gekennzeichnet, dass** die erste Bremsansteuerung (20) ein Abbremsen des Werkzeugs (8) von einer Nenndrehzahl (nn) auf eine vorgegebene Bremsdrehzahl (nb) in einer ersten Bremszeit (a) bewirkt, dass die zweite Bremsansteuerung (21) ein Abbremsen des Werkzeugs (8) von der Nenndrehzahl (nn) auf die vorgegebene Bremsdrehzahl (nb) in einer zweiten Bremszeit (b) bewirkt, und dass die zweite Bremszeit (b) länger als die erste Bremszeit (a) ist und wobei die Steuereinrichtung (12) den Elektromotor (10) bei unbetätigter Stellung (18) des Sperrelements (5) mit der zweiten Bremsansteuerung (21) ansteuert.

8. Arbeitsgerät nach Anspruch 6 oder 7,
**dadurch gekennzeichnet, dass** das Sperrelement (5) in unbetätigter Stellung (18) das Bedienelement (6) mechanisch sperrt.

9. Arbeitsgerät nach einem der Ansprüche 6 bis 8,
**dadurch gekennzeichnet, dass** das Sperrelement (5) auf einen Schalter (15) wirkt, der mit der Steuereinrichtung (12) verbunden ist, wobei das Sperrelement (5) den Schalter (15) in unbetätigter Stellung (18) betätigt.

10. Arbeitsgerät nach einem der Ansprüche 6 bis 9,
**dadurch gekennzeichnet, dass** das Arbeitsgerät (1) ein Trennschleifer und das Werkzeug (8) eine Trennscheibe ist.
